(19) Europäisches Patentamt
European Patent Office
Office européen des brevets

(11) **EP 3 076 303 A1**

(12) **EUROPEAN PATENT APPLICATION**
published in accordance with Art. 153(4) EPC

(43) Date of publication:
**05.10.2016 Bulletin 2016/40**

(51) Int Cl.:
**G06F 13/00** (2006.01)   **G06F 9/46** (2006.01)
**G06F 9/50** (2006.01)

(21) Application number: **14866433.7**

(22) Date of filing: **09.10.2014**

(86) International application number:
**PCT/JP2014/005142**

(87) International publication number:
**WO 2015/079612 (04.06.2015 Gazette 2015/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.11.2013   JP 2013243470**

(71) Applicant: **NEC Corporation
Tokyo 108-8001 (JP)**

(72) Inventor: **KOIZUMI, Seiichi
Tokyo 108-8001 (JP)**

(74) Representative: **Betten & Resch
Patent- und Rechtsanwälte PartGmbB
Maximiliansplatz 14
80333 München (DE)**

(54) **VIRTUAL MIDDLE BOX MANAGEMENT SYSTEM, VIRTUAL MIDDLE BOX MANAGEMENT METHOD, AND VIRTUAL MIDDLE BOX MANAGEMENT PROGRAM**

(57)   A virtual middle box management system is provided with a virtual middle box model generation means for generating a performance model of a virtual middle box in which correlation between the number of function rules of the virtual middle box and the virtual resource amount, input state, and performance of the same is abstracted. The virtual middle box management system may be provided with a virtual middle box chain derivation means for generating a plan for the allocation of a virtual machine to the virtual middle box as suitable for the characteristic of the virtual middle box. The virtual middle box chain derivation means may generate, using a communication network functional requirement and performance requirement as input, an instance of a virtual middle box chain in which the total amount of resource allocation is minimized.

Fig. 19

## Description

Technical Field

The present invention relates to a system and a method for managing virtual middleboxes and a program for managing virtual middleboxes. In particular, the present invention relates to a system and a method for managing virtual middleboxes and a program for managing virtual middleboxes for generating: performance resource models in accordance with the characteristics of virtual middleboxes; and a virtual middlebox chain instance with a minimized total amount of consumption resources.

Background Art

Company systems require high performance or high functionality for communication network (NW) functions (such as, a firewall, a load balancer). To achieve such requirements, NW functions are often provided by dedicated NW hardware appliances (hardware (HW) middleboxes). Such HW middleboxes have disadvantages of being expensive and lacking scalability.

In a cloud data center such as Infrastructure as a Service (IaaS), a variety of systems ranging from systems for small-scale companies to systems for large-scale companies operate. Each system that operates therein has different NW requirements. To address such a wide range of NW requirements, virtual middleboxes are increasingly used.

Virtual middleboxes (hereinafter, referred to as virtual MBs) are used by users to operate middleboxes, such as the firewall and the load balancer, in the form of virtual machines in a general-purpose server. In other words, virtual MBs can provide required performances as necessary. As such, virtual MBs have high scalability than HW middleboxes.

A single HW middlebox often has a plurality of kinds of NW functions. In contrast, a virtual MB often has only a single NW function. Thus, in cases where virtual MBs are used, a virtual MB chain can be constructed by a user by concatenating various kinds of virtual MBs to satisfy NW requirements of a company system.

The following describes virtual MBs and a virtual MB chain. A virtual MB is required to provide a function in accordance with a NW requirement. A user adjusts the NW function of a virtual MB by describing and setting a functional rule in the virtual MB. This functional rule is described according to a rule notation that is unified among a plurality of kinds of virtual MBs, as described in NPL1.

For example, if a virtual MB functions as a load balancer, and a user wants to use a 'number of active connections' function which distributes accesses to servers with fewer number of connections, the user can describe four functional rules in the virtual MB as follows:

[function] number of active connections <number of rules:4>

[rule]

    i) Zone[internet(INPUT SOURCE)]^Input[http(INPUT TYPE)]^Condition[any(CONDITION 1)] => Zone[DMZ(OUTPUT DESTINATION)]^State Option[the lowest connection server]
    ii) ...
    iii) ...
    iv) Zone[intranet](INPUT SOURCE)^Input[http(INPUT TYPE)]^Condition[any(CONDITION 1)] => Zone[internal network(OUTPUT DESTINATION)]^State Option[the lowest connection server]

In this way, a user can specify the function of a virtual MB by describing the rule thereof. In other words, a certain kind of virtual MB can include a plurality of kinds of functions. For example, a virtual MB as a load balancer can also include functions, such as 'round robin' and 'random choice,' as well as the 'number of active connections' function. In such a case, a rule is described for each function in the virtual MB as a load balancer.

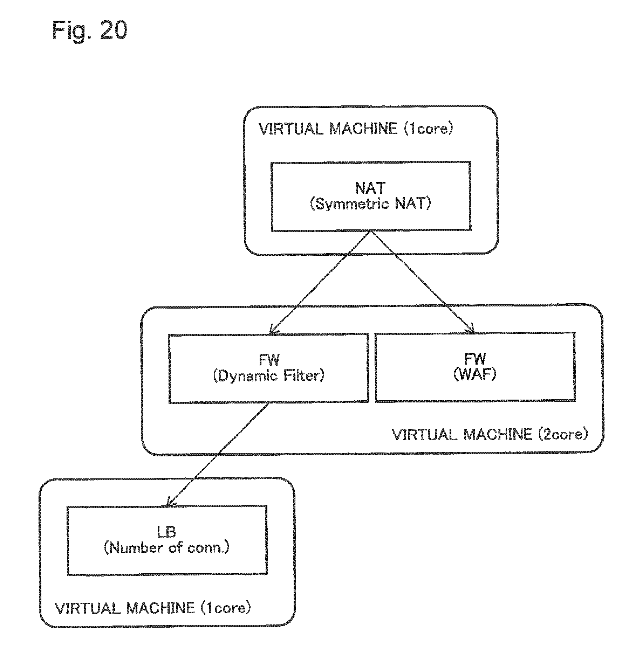

A virtual MB chain, constructed by concatenating the above described virtual MB functions, provides NW functions that satisfy requirements of a company system. Fig. 20 is an explanatory diagram illustrating an example of a virtual MB chain formed by concatenating virtual MBs. If a Network Address Translation (NAT) function, the firewall, and the load balancer are required as NW functions to satisfy the requirements of a company system, a user constructs a virtual MB chain by concatenating the virtual MBs as illustrated in Fig. 20

The virtual MB chain illustrated in Fig. 20 is used as follows: Suppose a company has a Web server (Web1) for providing product information and a Web application server (App1) for handling electronic commerce, such as placing orders. Since Web1 has a large number of accesses, a Web1 server group is constructed with n number of Web1 clones.

A virtual MB chain constituted of "NAT (Symmetric NAT) → FW (Dynamic Filter) → LB (Number of conn.)" is used as a chain for Web1. This virtual MB chain provides enhanced immunity against attacks by combining Symmetric NAT, which has superior protection performance among NAT functions, and Dynamic Filter, which has superior protection performance among FW functions, as well as, a function to equalize accesses over the Web1 server group by LB (Number of conn.). It should be noted that 'Number of conn.' means the above-described 'number of active connections' function.

A virtual MB chain constituted of "NAT (Symmetric NAT) → FEW (WAF)" is used as a chain for App1. Having WAF (Web Application Firewall) as a FW function, this virtual MB chain can prevent exposing vulnerability of App1 even if App1 still has unaddressed vulnerability.

The definition that defines only the constituents of a virtual MB chain is herein referred to as a virtual MB chain definition. Further, an apparatus configuration where virtual machines are allocated to the constituents of a virtual MB chain is herein referred to as a virtual MB chain instance.

Two factors influencing the performance of a virtual MB chain instance are as follows: One is the CPU (Central Processing Unit) resource amount of virtual machines, in which virtual MBs operate (for example, the number of virtual CPU cores). Virtual MBs, in principle, consume CPU resources, thus, a larger number of functional rules consume more resources. In other words, there is a correlation among the processing delay time (performance), the CPU resource amount, and the number of functional rules of virtual MBs.

The second factor is allocation of virtual MBs to virtual machines. A virtual machine can mount a plurality of kinds of virtual MBs. In such a case, alleviation of communication delay is expected, as communications among virtual MBs coexisting in a virtual machine are performed in high speed. On the other hand, performances of the virtual MBs may possibly be deteriorated, as the virtual MBs share the CPU resource of the same virtual machine.

In order to provide NW functions that satisfy the requirements of a company system while establishing a virtual MB chain instance with minimized consumption resources, allocation of CPU resources to virtual machines and deployment of virtual MBs to virtual machines should be optimized in consideration of the number of functional rules of the virtual MBs constituting the virtual MB chain.

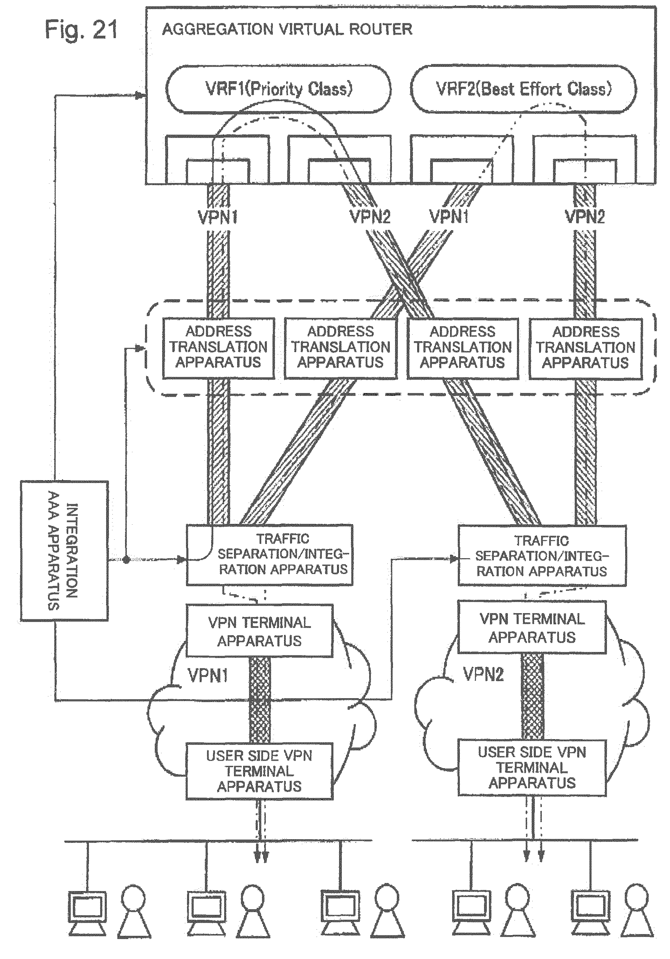

PTL1 describes an example of a typical middlebox management system. Fig. 21 is an explanatory diagram illustrating a middlebox management system described in PTL1. As illustrated in Fig. 21, this middlebox management system is constituted of address translation apparatuses, traffic separation/integration apparatuses, an integration AAA apparatus, and an aggregation virtual router.

Having such a configuration, the middlebox management system controls bandwidths and communication paths in consideration of the operation states of the address translation apparatuses, which are equivalent to MBs, and the traffic amounts of the same. However, this middlebox management system only takes into account band widths as resources, neglecting control of the performance of the address translation apparatuses in terms of the number of control rules and CPU resources. As such, this middlebox management system cannot manage the performance of NW functions.

Citation List

Patent Literature

PTL1: Japanese Unexamined Patent Application Publication No.2011-228864

Non Patent Literature

NPL1: D. Joseph, 2008. Modeling middleboxes, IEEE NETWORK (Volume: 22, Issue: 5), pp. 20-25

Summary of Invention

Technical Problem

The first problem is difficulty in allocation of CPU resources to virtual machines to control the performance of virtual MBs. This is because of the lack of mechanism that controls allocation of CPU resources in consideration of a correlation among the number of functional rules. CPU resource amounts, and performance of virtual MBs.

The second problem is difficulty in establishing a virtual MB chain instance with minimized consumption resources. This is because of the lack of mechanism that minimizes the total allocation of CPU resources of a virtual MB chain instance in consideration of the influence of allocation of virtual MBs to virtual machines and allocation of the CPU resources to virtual machines.

Thus, an object of the present invention is to provide a virtual middlebox management system, a virtual middlebox management method, and a virtual middlebox management program that can generate performance models of virtual middleboxes in consideration of a correlation among the number of functional rules, CPU resource amounts, and performance of the virtual middleboxes.

Solution to Problem

A virtual middlebox management system according to one aspect of the present invention includes virtual middlebox model generation means that generates a performance model of a virtual middlebox by abstracting a correlation among number of functional rules, an amount of virtual resources, an input condition, and a performance of the virtual middlebox.

A virtual middlebox management method according to one aspect of the present invention includes generating a performance model of a virtual middlebox by abstracting a correlation among number of functional rules, an amount of virtual resources, an input condition, and a performance of the virtual middlebox.

A virtual middlebox management program according to one aspect of the present invention, which causes a computer to execute virtual middlebox model generation processing that generates a performance model of a virtual middlebox by abstracting a correlation among number of functional rules, an amount of virtual resources, an input condition, and a performance of the virtual middlebox.

Advantageous Effects of Invention

According to the present invention, performance models of virtual middleboxes can be generated in consideration of a correlation among the number of functional rules, CPU resource amounts and performance of the virtual middleboxes.

Brief Description of Drawings

Fig. 1 is a block diagram illustrating a configuration example of a virtual MB management system 10;
Fig. 2 is an explanatory diagram illustrating an example of information for generating a virtual MB model;
Fig. 3 is an explanatory diagram illustrating an example of virtual MB model information;
Fig. 4 is an explanatory diagram illustrating an example of instance candidate information;
Fig. 5 is an explanatory diagram illustrating an example of virtual MB chain instance information;
Fig. 6 is an explanatory diagram illustrating an example of virtual MB functional information;
Fig. 7 is an explanatory diagram illustrating an example of functional rule information;
Fig. 8 is an explanatory diagram illustrating an example of requirement and constraint information;
Fig. 9 is an explanatory diagram illustrating an example of virtual MB chain definition information;
Fig. 10 is an explanatory diagram illustrating an example of monitoring information;
Fig. 11 is an explanatory diagram illustrating an example of a virtual system;
Fig. 12 is a flowchart illustrating the operation of generating a virtual MB model of the virtual MB management system 10;
Fig. 13 is a flowchart illustrating the operation of generating a virtual MB chain instance candidate of the virtual MB management system 10;
Fig. 14 is a flowchart illustrating the operation of selecting a virtual MB chain instance of the virtual MB management system 10;
Fig. 15 is an explanatory diagram illustrating an example of generating a virtual MB chain instance candidate;
Fig. 16 is an explanatory diagram illustrating an example of generating a virtual MB chain instance candidate;
Fig. 17 is an explanatory diagram illustrating an example of a virtual MB chain instance;
Fig. 18 is an explanatory diagram illustrating an example of a virtual MB chain instance;

Fig. 19 is a block diagram illustrating an overview of a virtual middlebox management system of the present invention;
Fig. 20 is an exemplary diagram illustrating an example of a virtual MB chain formed by concatenating virtual MBs; and
Fig. 21 is an explanatory diagram illustrating a middlebox management system described in PTL1.

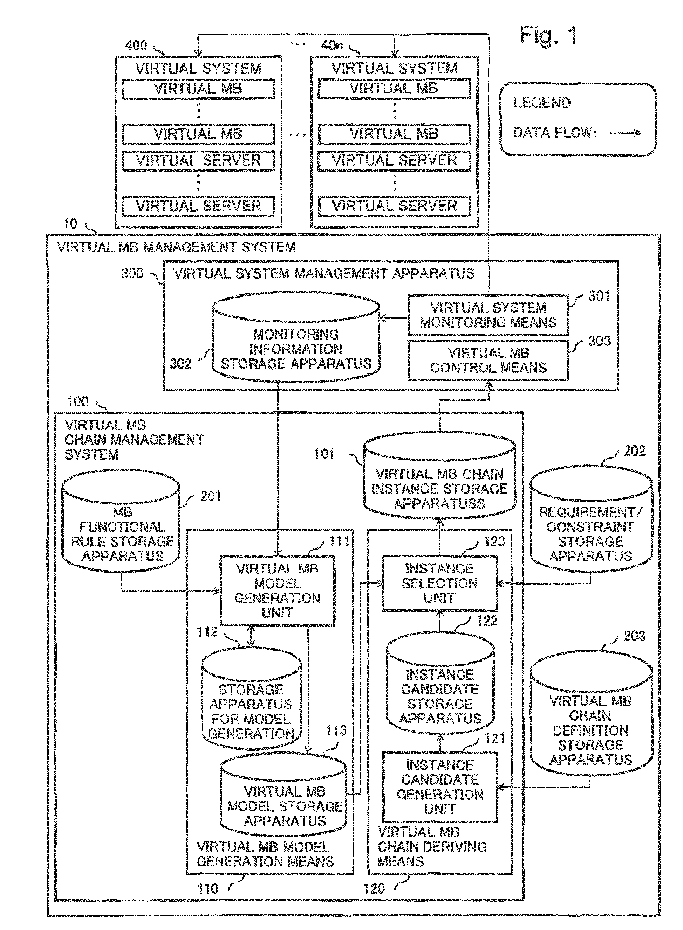

The following describes the exemplary embodiment of the present invention with reference to the drawings. Fig. 1 is a block diagram illustrating a configuration example of a virtual MB management system 10. The virtual MB management system 10 illustrated in Fig. 1 includes a virtual MB chain management system 100, a virtual system management apparatus 300, a MB functional rule storage apparatus 201, a requirement/constraint storage apparatus 202, and a virtual MB chain definition storage apparatus 203.

In the exemplary embodiment, with respect to virtual MBs operating in virtual systems 400 to 40n in a service system, the virtual MB management system 10 generates virtual MB models, generates virtual MB chain instance candidates, and selects a virtual MB chain instance.

The virtual MB chain management system 100 includes virtual MB model generation means 110, virtual MB chain deriving means 120, and a virtual MB chain instance storage apparatus 101.

The virtual MB model generation means 110 has a function of generating a virtual MB model for predicting the performance of a virtual MB. The virtual MB model generation means 110 has a virtual MB model generation unit 111, a storage apparatus for model generation 112, and a virtual MB model storage apparatus 113.

The virtual MB model generation unit 111 has a function of acquiring necessary information from the storage apparatus for model generation 112, the MB functional rule storage apparatus 201, and the monitoring information storage apparatus 302 and formulating a virtual MB model by multi-variable analysis using processing time as an objective variable and other elements as explanatory variables.

The storage apparatus for model generation 112 has a function of storing, for generating a virtual MB model, an input frequency of a virtual MB, processing time of the virtual MB, CPU resource allocation to a virtual machine, in which the virtual MB operates, and the total number of functional rules of all the virtual MBs in the virtual machine, in which the virtual MB operates.

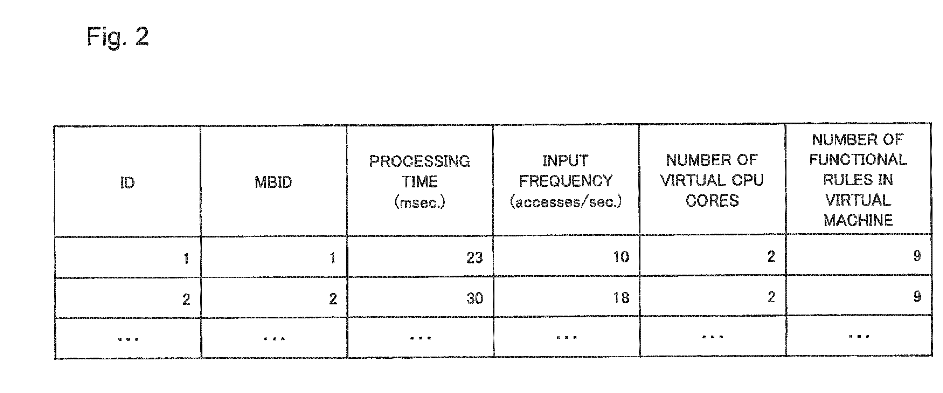

An example of information for generating a virtual MB model stored in the storage apparatus for model generation 112 is illustrated in Fig. 2. Fig. 2 is an explanatory diagram illustrating an example of information for generating a virtual MB model.

The information for generating a virtual MB model illustrated in Fig. 2 is constituted of ID (Identify), MBID (middlebox Identify), processing time, an input frequency, the number of virtual CPU cores, and the number of functional rules within a virtual machine. The ID is identification information for uniquely identifying generated information for generating a virtual MB model. The MBID is identification information for identifying a virtual MB to be generated by information for generating a virtual MB model corresponding to the ID.

The processing time is a time, in units of milliseconds, required from the start until the end of processing by a virtual MB of a target of the information for generating a virtual MB model. The input frequency is a frequency of input to a virtual MB in units of accesses per second.

The number of virtual CPU cores is the number of virtual CPU cores mounted in a virtual machine, in which a virtual MB of a target of the information for generating a virtual MB model operates. The number of functional rules within a virtual machine is the total number of functional rules for all the virtual MBs operating within a virtual machine, in which the subject virtual MB operates.

It should be noted that, as described later herein, information for generating a virtual MB model is generated by the virtual MB model generation unit 111 based on the monitoring information stored in the monitoring information storage apparatus 302.

The virtual MB model storage apparatus 113 has a function of storing a virtual MB model generated by the virtual MB model generation unit 111.

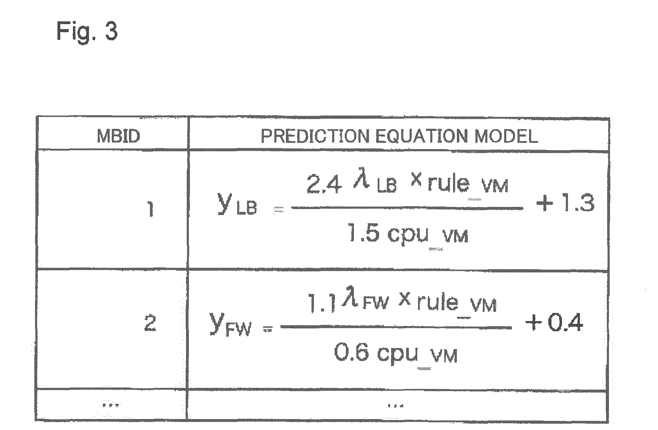

An example of virtual MB model information that is stored in the virtual MB model storage apparatus 113 is illustrated in Fig. 3. Fig. 3 is an explanatory diagram illustrating an example of virtual MB model information.

The virtual MB model information illustrated in Fig. 3 is constituted of MBID and a prediction equation model. The MBID, indicates a virtual MB which is created from a virtual MB model generated by the virtual MB model generation unit 111. The prediction equation model is a virtual MB model that is generated by the virtual MB model generation unit 111. corresponding to MBID.

The virtual MB chain deriving means 120 has a function of deriving an optimized virtual MB chain instance. The virtual MB chain deriving means 120 has an instance candidate generation unit 121, an instance candidate storage apparatus 122, and an instance selection unit 123.

The instance candidate generation unit 121 has a function of generating a plurality of virtual MB chain instance candidates, in which virtual machines are allocated based on the virtual MB chain definition acquired from the virtual MB chain definition storage apparatus 203.

The instance candidate storage apparatus 122 has a function of storing the virtual MB chain instance candidates generated by the instance candidate generation unit 121.

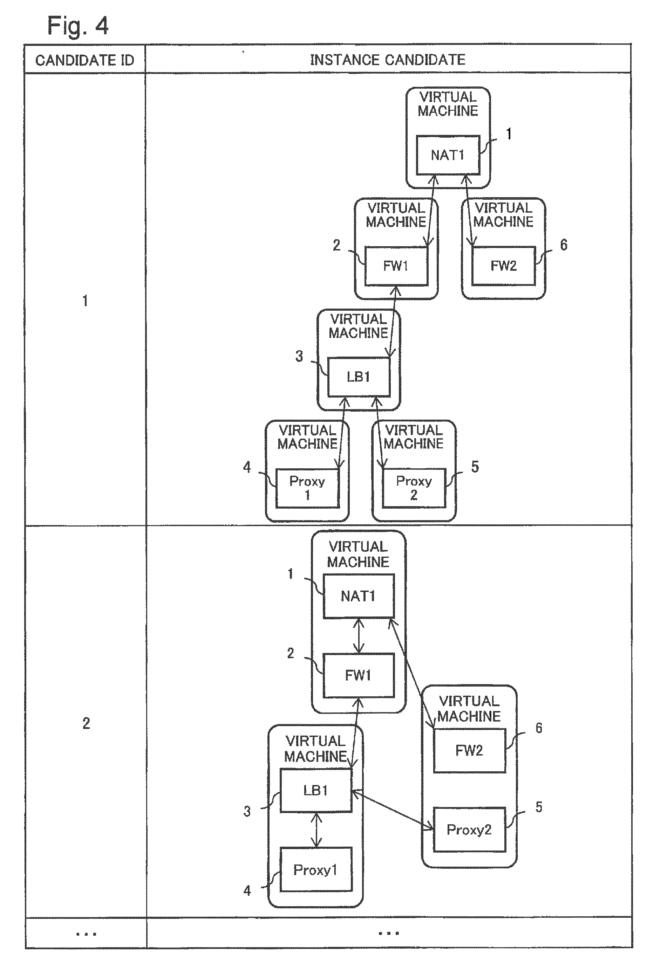

An example of instance candidate information stored in the instance candidate storage apparatus 122 is illustrated in Fig. 4. Fig. 4 is an explanatory diagram illustrating an example of instance candidate information.

The instance candidate information illustrated in Fig. 4 is constituted of candidate ID and an instance candidate. The candidate ID is identification information for uniquely identifying the generated instance candidate. The instance candidate is a virtual MB chain instance candidate that is generated by the instance candidate generation unit 121, corresponding to the candidate ID. It should be noted that the virtual MB chain instance candidates corresponding to candidate ID "1" and candidate ID "2" respectively include virtual MBs 1 to 6.

The instance selection unit 123 has a function of acquiring necessary information from the virtual MB model storage apparatus 113 and the requirement/constraint storage apparatus 202 and estimating the minimum virtual CPU resource allocation among virtual MB chain instance candidates that are stored in the instance candidate storage apparatus 122, which satisfies performance requirements. The instance selection unit 123, further, selects a virtual MB chain instance that minimizes the sum of the virtual CPU resources.

The virtual MB chain instance storage apparatus 101 has a function of storing a virtual MB chain instance that has been selected by the instance selection unit 123.

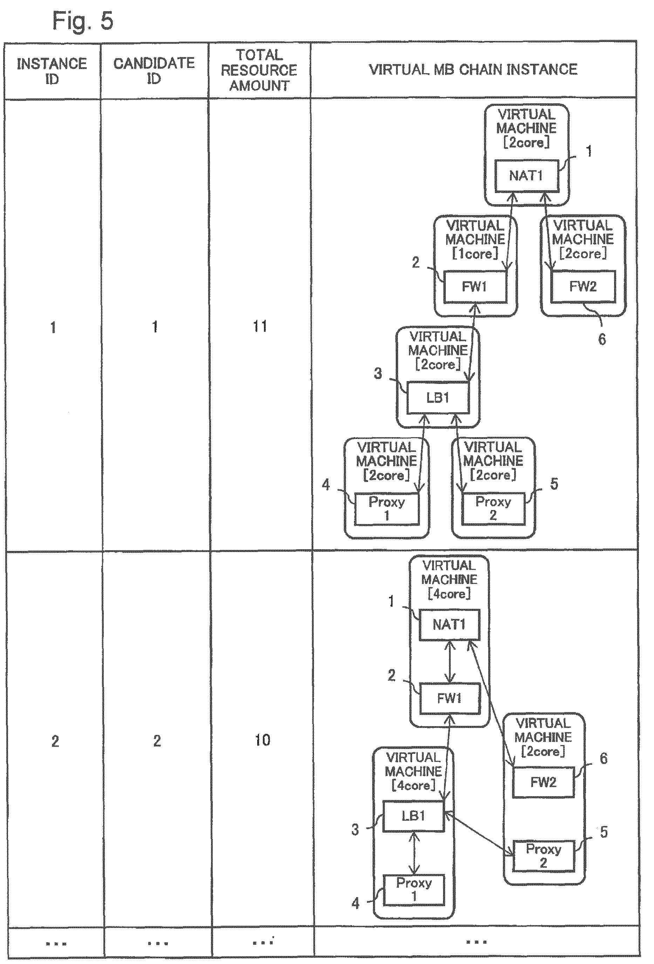

An example of virtual MB chain instance information stored in the virtual MB chain instance storage apparatus 101 is illustrated in Fig. 5. Fig. 5 is an explanatory diagram illustrating an example of virtual MB chain instance information.

The virtual MB chain instance information illustrated in Fig. 5 is constituted of instance ID, candidate ID, a total resource amount, and a virtual MB chain instance. The instance ID is identification information for uniquely identifying a selected virtual MB chain instance. The candidate ID indicates instance candidate information, in which a virtual MB chain instance corresponding to instance ID is stored.

The total resource amount is a sum of the number of virtual CPU cores in minimum virtual CPU resource allocation that satisfies the performance requirements of a virtual MB chain instance that was estimated by the instance selection unit 123, corresponding to the instance ID. The virtual MB chain instance is a virtual MB chain instance that was selected by the instance selection unit 123, corresponding to the instance ID.

The MB functional rule storage apparatus 201 has a function of storing information of the functional rule definition of a virtual MB and the number of rules of a virtual MB.

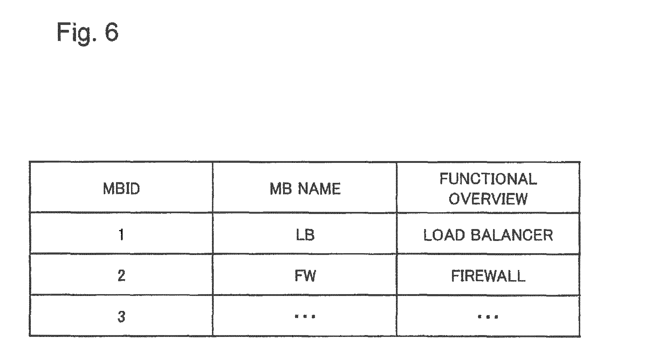

An example of the virtual MB functional information stored in the MB functional rule storage apparatus 201 is illustrated in Fig. 6. Fig. 6 is an explanatory diagram illustrating an example of virtual MB function information.

The virtual MB functional information is constituted of MBID, a MB name, and a functional description.

The MBID indicates a virtual MB as a subject of corresponding virtual MB functional information. The MB name is the name of a virtual MB corresponding to MBID. The functional description is a description of a function that is set for a virtual MB corresponding to MBID.

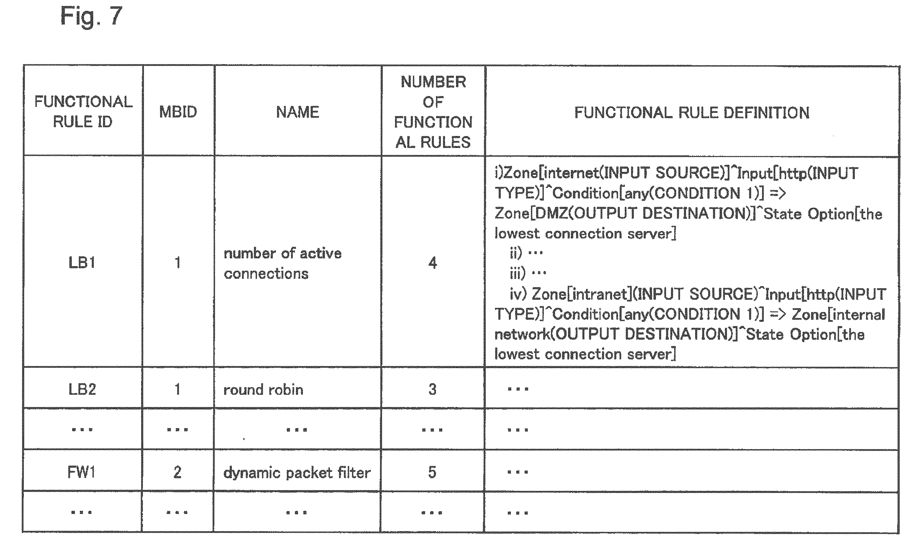

An example of the functional rule information stored in the MB functional rule storage apparatus 201 is illustrated in Fig. 7. Fig. 7 is an explanatory diagram illustrating an example of functional rule information.

The functional rule information is constituted of functional rule ID, MBID, a name, the number of functional rules, and a functional rule definition. The functional rule ID is identification information that uniquely identifies a functional rule as a subject of corresponding functional rule information. The MBID represents a virtual MB, for which a functional rule corresponding to functional rule ID is set.

The name is a name of a functional rule corresponding to functional rule ID. The number of functional rules is the number of rules that are set in a functional rule corresponding to functional rule ID. The functional rule definition is a definition of a functional rule corresponding to functional rule ID.

The requirement/constraint storage apparatus 202 has a function of storing an upper limit value of processing time of the entire virtual MB chain instance to be generated and an upper limit value of virtual CPU cores that can be allocated to virtual machines, as conditions for generating a virtual MB chain instance.

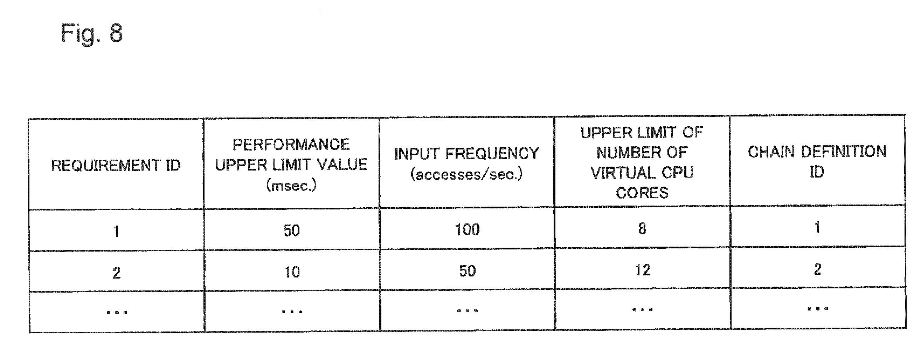

An example of the requirement/constraint information stored in the requirement/constraint storage apparatus 202 is illustrated in Fig. 8. Fig. 8 is an explanatory diagram illustrating an example of requirement and constraint information.

The requirement/constraint information is constituted of requirement ID. a performance upper limit value, an input frequency, an upper limit value of the number of virtual CPU cores, and chain definition ID. The requirement ID is identification information for uniquely identifying requirements/constraints for corresponding requirement/constraint information. The performance upper limit value is requirement information indicating the maximum value of allowable processing time corresponding to requirement ID in units of milliseconds.

The input frequency is requirement information indicating a frequency of expected input, corresponding to requirement ID, in units of accesses per second. The upper limit value of the number of virtual CPU cores is constraint information, corresponding to requirement ID. indicating the maximum value of the number of virtual CPU cores that can be allocated to virtual machines. The chain definition ID is chain definition ID of a virtual MB chain, to which requirement/constraint information corresponding to requirement ID is applied.

The virtual MB chain definition storage apparatus 203 has a function of storing configuration information of a virtual MB chain within a virtual system.

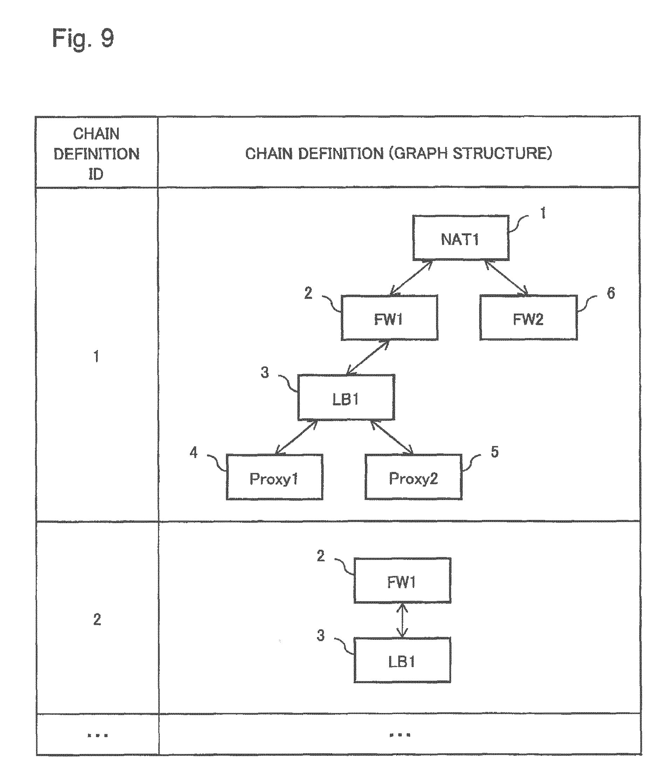

An example of virtual MB chain definition information stored in the virtual MB chain definition storage apparatus 203 is illustrated in Fig. 9. Fig. 9 is an explanatory diagram illustrating an example of virtual MB chain definition information.

The virtual MB chain definition information is constituted of chain definition ID and a chain definition (graph structure). The chain definition ID is identification information for uniquely identifying a virtual MB chain definition as a subject of corresponding virtual MB chain definition information. The chain definition (graph structure) is a definition of a virtual MB chain indicated by a graph structure corresponding to chain definition ID.

The virtual system management apparatus 300 includes virtual system monitoring means 301, monitoring information storage apparatus 302, and virtual MB control means 303.

The virtual system monitoring means 301 has a function of, for each time processing is performed in a virtual MB, measuring processing time of the virtual MB, a frequency of input to the virtual MB during the time of processing, CPU resource allocation to a virtual machine, in which the virtual MB operates.

The monitoring information storage apparatus 302 has a function of storing monitoring information that is measured by the virtual system monitoring means 301.

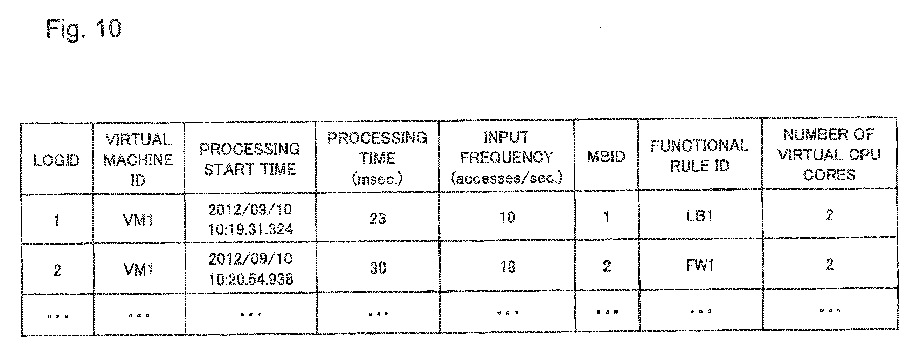

An example of monitoring information stored in the monitoring information storage apparatus 302 is illustrated in Fig. 10. Fig. 10 is an explanatory diagram illustrating an example of monitoring information.

The monitoring information is constituted of LogID, virtual machine ID, a processing start time, a processing time, an input frequency, MBID, functional rule ID, and the number of virtual CPU cores. The LogID is identification information for uniquely identifying stored monitoring information. The virtual machine ID indicates a virtual machine as a subject, from which monitoring information corresponding to LogID is acquired.

The processing start time is time when processing, as a subject of monitoring information corresponding to LogID, started. The processing time is a time duration required from the start until the end of subject processing in units of milliseconds. The input frequency is a frequency of input to a virtual MB performing subject processing in units of accesses per second. The input frequency can be calculated, for example, from the recent past access information.

The MBID indicates a virtual MB, in which processing as a subject of monitoring information corresponding to LogID is performed. The functional rule ID indicates a functional rule that is set for a virtual MB corresponding to MBID. The number of virtual CPU cores is the number of virtual CPU cores mounted in a virtual machine corresponding to virtual machine ID.

The virtual MB control means 303 has a function of generating a virtual MB chain instance, and changing or deleting a virtual MB chain instance stored in the virtual MB chain instance storage apparatus 101.

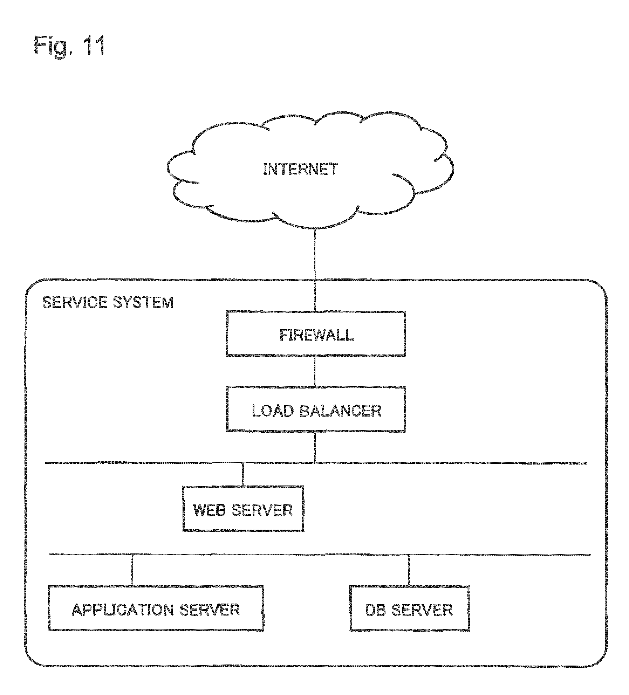

The virtual systems 400 to 40n provide an environment where a service system having virtual MBs and virtual servers as components, as shown in Fig. 11, operates. Fig. 11 is an explanatory diagram illustrating an example of a virtual system.

It should be noted that in the virtual MB management system 10 in the exemplary embodiment, the virtual MB chain management system 100, virtual system management apparatus 300, and virtual systems 400 to 40n are, for example, realized by a CPU. Alternatively, the virtual MB chain management system 100, virtual system management apparatus 300, and virtual systems 400 to 40n may be realized by hardware.

Further, the virtual MB model generation unit 111, the instance candidate generation unit 121, the instance selection unit 123, the virtual system monitoring means 301, and the virtual MB control means 303 are realized, for example, by a CPU that performs processing in accordance with a program control.

Further, in the virtual MB management system 10 of the exemplary embodiment, the MB functional rule storage apparatus 201, requirement/constraint storage apparatus 202, and virtual MB chain definition storage apparatus 203 are, for example, realized by a semiconductor memory or a hard disk drive.

Further, the virtual MB chain instance storage apparatus 101. storage apparatus for model generation 112, virtual MB model storage apparatus 113, instance candidate storage apparatus 122, and monitoring information storage apparatus 302 are realized, for example, by RAM (Random Access Memory).

The following describes the operation of a virtual MB management system of the exemplary embodiment.

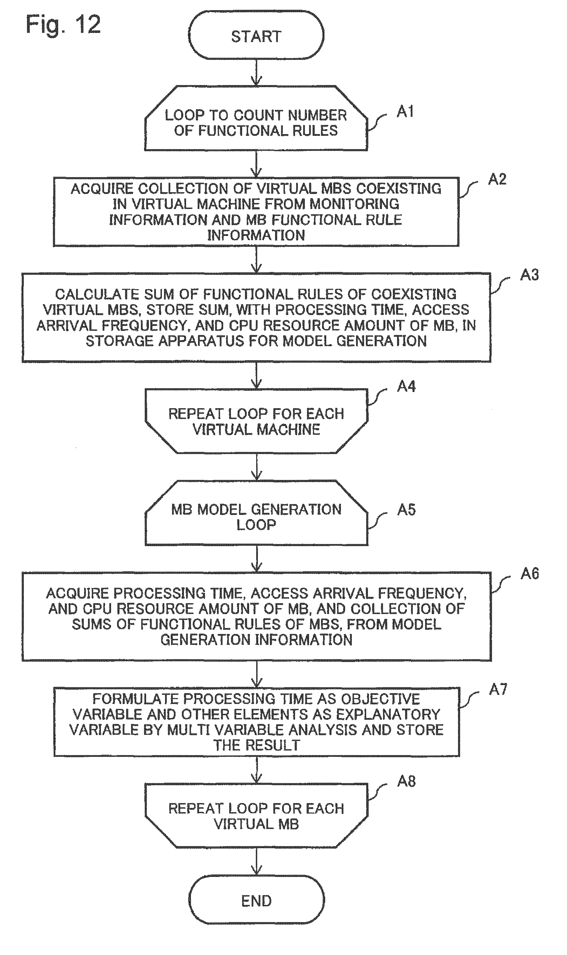

First, the operation of generating a virtual MB model is described with reference to the flowchart of Fig. 12. Fig. 12 is a flowchart illustrating the operation of generating a virtual MB model in the virtual MB management system 10.

[Generating a virtual MB model]

The virtual MB model generation unit 111 retrieves monitoring information as illustrated in Fig. 10 from the monitoring information storage apparatus 302. The virtual MB model generation unit 111 separates monitoring information for each virtual machine stored in the monitoring information by sorting the retrieved monitoring information by virtual machine ID (step A1).

The virtual MB model generation unit 111 identifies a virtual MB that operates in a virtual machine by linking ID of a virtual MB "MBID" of monitoring information relating to a virtual machine and virtual MB functional information in the MB functional rule storage apparatus 201 (step A2).

The virtual MB model generation unit 111 calculates the sum of the number of functional rules of the identified virtual MB using the functional rule information in the MB functional rule storage apparatus 201. The virtual MB model generation unit 111 stores the calculated sum of the number of functional rules, together with the processing time, access input frequency, and CPU resource amount of the virtual MB, in the storage apparatus for model generation 112 (step A3).

The virtual MB model generation unit 111 performs the processing of step A2 and the processing of step A3 for each virtual machine (step A4).

After completing calculation of the sum of the number of functional rules for every virtual machine, the virtual MB model generation unit 111 generates a virtual MB model for each virtual MB from the information for generating a virtual MB model stored in the storage apparatus for model generation 112 (step A5).

The virtual MB model generation unit 111 retrieves a set of information constituted of processing time of a virtual MB, an input frequency of the virtual MB, the number of virtual CPU cores for a virtual machine, in which the virtual MB operates, the sum of the number of functional rules of all the virtual MBs that operate within the virtual machine, in which the virtual MB operates, for each virtual MB (step A6).

The reason for retrieving information in such a manner is because an input frequency of a virtual MB, the number of virtual CPU cores of a virtual machine, in which the virtual MB operates, and the sum of the number of functional rules of all the virtual MBs operating within the virtual machine influence the processing time of the virtual MB. If a plurality of virtual MBs are allocated to one virtual machine, as delay possibly occurs in the processing time of the virtual MBs due to interaction among the virtual MBs, the sum of the number of functional rules is considered for generation of a virtual MB model.

Then, the virtual MB model generation unit 111 performs multi-variable analysis using processing time of a virtual MB as an objective variable and an input frequency of the virtual MB, the number of virtual CPU cores of a virtual machine, in which the virtual MB operates, the sum of the number of functional rules of all the virtual MBs operating within the virtual machine, in which the virtual MB operates as explanatory variables, and generates a virtual MB model as expressed below (step A7):
[Math 1]

$$y_{MB} = \frac{A\lambda_{MB} \times rule_{VM}}{Br_{cpu\_VM}} + C \quad \cdots \text{ equation (1)}$$

In equation (1), A and B are coefficients and C is an intercept. Further, processing time corresponds to y; an input frequency, λ; the number of functional rules, rule; and the number of CPU cores, r. The generated virtual MB model is stored in the virtual MB model storage apparatus 113.

The virtual MB model generation unit 111 performs the processing of step A6 and the processing of step A7 for each virtual MB (step A8). After completing generation of a virtual MB model for every virtual MB, the virtual MB model generation unit 111 ends the processing.

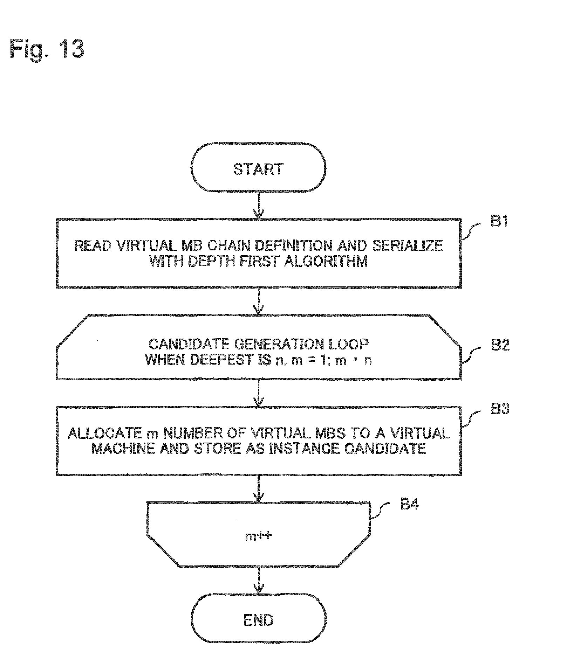

Next, the operation of generating a virtual MB chain instance candidate of the exemplary embodiment will be described with reference to the flowchart of Fig. 13. Fig. 13 is a flowchart illustrating the operation of generating a virtual MB chain instance candidate of the virtual MB management system 10.

[Generating a virtual MB chain instance candidate]

An operation administrator of a virtual system stores a virtual MB chain definition, as illustrated in Fig. 9, of a virtual MB chain that the operation administrator wants to establish in the virtual MB chain definition storage apparatus 203. The performance requirements and constraint contents (the upper limit value of the virtual CPU cores of virtual machines), as illustrated in Fig. 8, of a virtual MB chain that the operation administrator wants to establish are stored in the requirement/constraint storage apparatus 202 in advance.

The instance candidate generation unit 121 of the virtual MB chain deriving means 120 reads a virtual MB chain definition from the virtual MB chain definition storage apparatus 203. For the virtual MB chain defined by the read virtual MB chain definition, the instance candidate generation unit 121 orders virtual MBs within the virtual MB chain by a depth-first search algorithm (step B1).

If the maximum depth of the virtual MB chain according to the read virtual MB chain definition is defined as n, the instance candidate generation unit 121 defines the maximum number of virtual MBs that can be allocated to virtual machines as n (step B2).

The instance candidate generation unit 121 generates a virtual MB chain instance candidate by allocating one virtual MB for a virtual machine. The instance candidate generation unit 121 stores the generated virtual MB chain instance candidate in the instance candidate storage apparatus 122 (step B3).

The instance candidate generation unit 121 allocates virtual MBs to virtual machines by incrementing the number of virtual MBs allocated to a virtual machine in ascending order (step B4). For example, when allocating two virtual MBs to a virtual machine, the instance candidate generation unit 121 sorts virtual MBs and allocates the virtual MBs, in the order from a smaller number to a larger number, to a virtual machine.

Finally, the instance candidate generation unit 121 generates and stores n kinds of virtual MB chain instance candidates in the instance candidate storage apparatus 122. After generating n kinds of virtual MB chain instance candidates, the instance candidate generation unit 121 ends the processing.

Using such a method, the instance candidate generation unit 121 can generate allocation patterns of virtual MBs to a plurality of virtual machines. Since a virtual MB chain is successively processed from top to bottom, the instance candidate generation unit 121 is set to allocate virtual MBs to virtual machines with vertical priority.

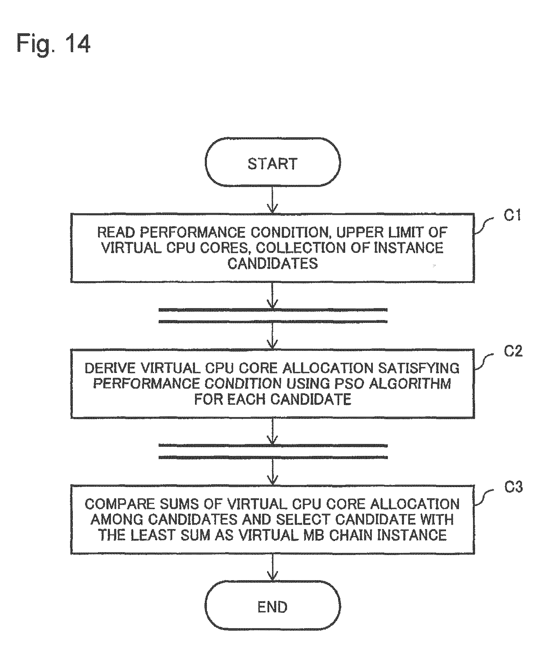

Next, the operation of selecting a virtual MB chain instance of the exemplary embodiment will be described with reference to the flowchart of Fig. 14. Fig. 14 is a flowchart illustrating the operation of selecting a virtual MB model instance of the virtual MB management system 10.

[Selecting a virtual MB chain instance]

The instance selection unit 123 reads a virtual MB chain instance candidate from the instance candidate storage apparatus 122. Further, the instance selection unit 123 reads a virtual MB model from the virtual MB model storage apparatus 113. Further, the instance selection unit 123 reads performance requirements and constraint contents (the upper limit value of the virtual CPU cores of virtual machines) from the requirement/constraint storage apparatus 202 (step C1). The double line between step C1 and step C2 means that reading processings are performed in parallel.

Next, the instance selection unit 123 substitutes an input frequency of the virtual MB model from a performance requirement. Further, the instance selection unit 123 calculates and substitutes the number of functional rules by identifying coexisting virtual MBs from a virtual MB chain instance candidate.

Then, the instance selection unit 123 inputs a collection of the virtual MB models within the virtual MB chain instance candidate, the maximum value of the processing time Y of the virtual MB chain, and the upper limit value of the virtual CPU cores, and applies Particle Swarm Optimization (PSO) algorithm by setting the minimum value of the virtual CPU cores as an estimation subject. As the result of application of the algorithm, the instance selection unit 123 can estimate the minimum number of virtual CPU cores that satisfies the performance requirement of a subject virtual MB chain instance candidate (step C2).

The instance selection unit 123 performs the estimation processings of the minimum number of virtual CPU cores in parallel for respective virtual MB chain instance candidates. The double line between step C2 and step C3 means that estimation processings of the minimum number of virtual CPU cores are performed in parallel for respective virtual MB chain instance candidates.

The instance selection unit 123 further compares the estimated sums of the virtual CPU cores of the respective virtual MB chain instance candidates and selects the best virtual MB chain instance, in which virtual machines and virtual CPU cores are allocated so as to minimize the virtual CPU resource consumption (step C3). After the selection, the instance selection unit 123 ends the processing.

The operation administrator of the virtual system checks information of virtual MB chain instance candidates stored in the virtual MB chain instance storage apparatus 101. Then, the operation administrator inputs of the virtual MB chain instance to the virtual MB control means 303, the constituent information minimizing the virtual CPU resource consumption amount. The operation administrator changes the configuration of the virtual MB chain instance within the virtual system.

The following describes the operation of the exemplary embodiment using a specific example. The virtual system monitoring means 301 of the virtual system management apparatus 300 records monitoring information as illustrated in Fig. 10 in the monitoring information storage apparatus 302 line by line when there is an access to a virtual MB. Here, the input frequency is calculated by the recent past access information.

[Generating a virtual MB model]

The virtual MB model generation means 110 of the virtual MB chain management system 100 retrieves monitoring information from the monitoring information storage apparatus 302 by the virtual MB model generation unit 111. The virtual MB model generation unit 111 separates monitoring information for each virtual machine recorded in the monitoring information by sorting the retrieved monitoring information by virtual machine ID (step A2).

According to the monitoring information illustrated in Fig. 10, the virtual machine with virtual machine ID "VM1" is assumed as running a firewall with MBID "1" (functional rule ID is FW1) and a load balancer with MBID "2" (functional rule ID is LB1). In this case, according to the functional rule information stored in the MB functional rule storage apparatus 201 illustrated in Fig. 7, the number of functional rules of FW1 is five, and the number of functional rules of LB1 is four.

Here, as illustrated in Fig. 2, the virtual MB model generation unit 111 stores, as the result of the separating processing, the processing time, access input frequencies, and CPU resource amounts of the virtual MBs of monitoring information for respective MBIDs, as well as, a value nine as the sum of the number of functional rules within the virtual machine in the storage apparatus for model generation 112 (step A3). The virtual MB model generation unit 111 performs this processing of calculating the number of functional rules for each virtual machine (step A4).

Next, the virtual MB model generation unit 111 performs multi-variable analysis using processing time of a virtual MB, as an objective variable, and input frequency of the virtual MB, the number of virtual CPU cores of a virtual machine, in which the virtual MB operate, and the sum of the number of functional rules of virtual MBs that operate within the virtual machine, as explanatory variables, based on the information stored in the storage apparatus for model generation 112 (steps A6 to A7).

The virtual MB model generation unit 111 generates a virtual MB model, as illustrated in Fig. 3, for each virtual MB and stores the generated virtual MB model in the virtual MB model storage apparatus 113 (step A8). The processing time of the virtual MB is estimated by inputting an input frequency of the virtual MB in the generated virtual MB model.

[Selecting a virtual MB chain instance candidate]

Suppose the virtual system administrator wants to acquire a virtual MB chain using virtual MBs of NAT, a firewall, a load balancer, and a proxy server, as illustrated in the virtual MB chain definition corresponding to chain definition ID "1" in Fig. 9. In the specific example, the performance requirement and constraint contents of the virtual MB chain to be acquired is assumed, as indicated by the requirement/constraint information corresponding to the requirement ID "1" in Fig. 8, that the maximum processing time is 50 milliseconds; an input frequency, 100 accesses/second; and the upper limit value of the virtual CPU core allocation of virtual machines, eight.

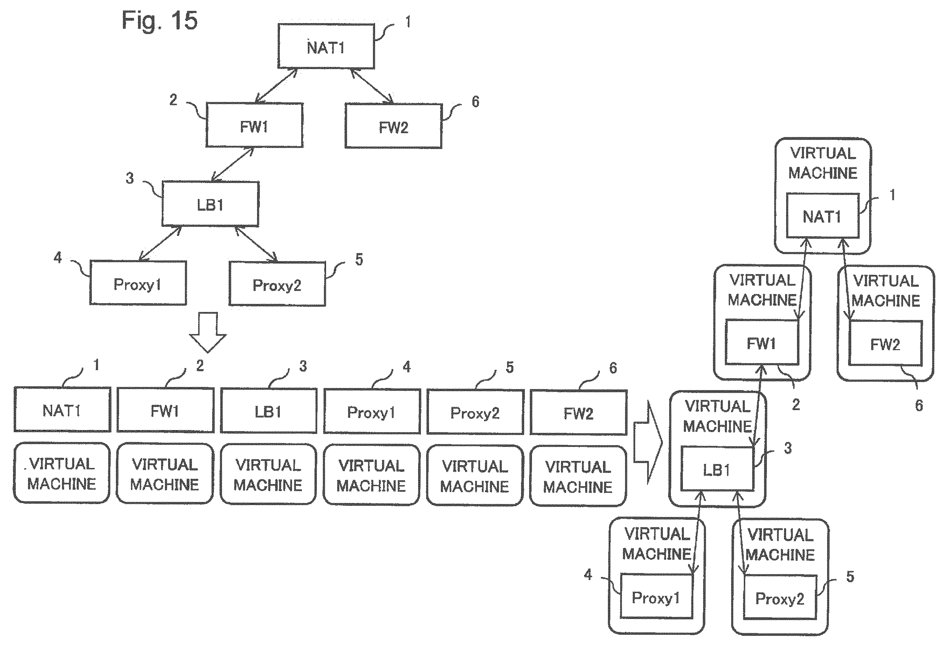

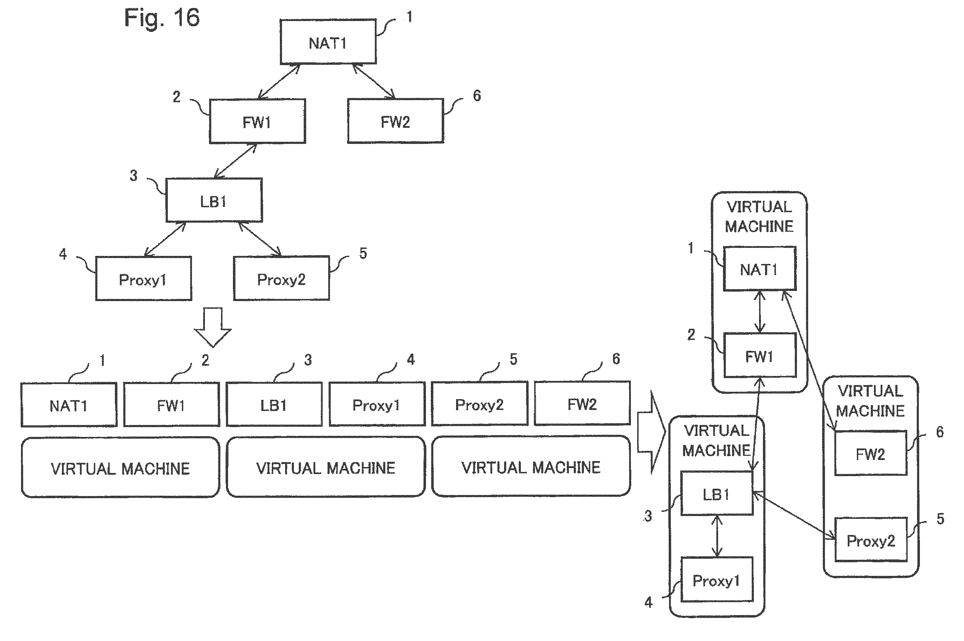

The following describes a method of generating a virtual MB chain instance candidate by the instance candidate generation unit 121 of the virtual MB chain deriving means 120 with reference to Figs. 15 and 16. Figs. 15 and 16 are explanatory diagrams illustrating an example of generating a virtual MB chain instance candidate.

The instance candidate generation unit 121 of the virtual MB chain deriving means 120 serializes a chain by a depth-first search (step B1). The instance candidate generation unit 121 generates a virtual MB chain instance candidate by allocating one virtual MB to a virtual machine, as illustrated in Fig. 15. The instance candidate generation unit 121 stores the generated virtual MB chain instance candidate in the instance candidate storage apparatus 122 as illustrated by the instance candidate corresponding to candidate ID "1" of Fig. 4 (step B3).

Next, as illustrated in Fig. 16, the instance candidate generation unit 121 generates a virtual MB chain instance candidate by allocating two virtual MBs to a virtual machine from the upstream side of the chain.

The instance candidate generation unit 121 stores the generated virtual MB chain instance candidate in the instance candidate storage apparatus 122 as illustrated by the instance candidate corresponding to candidate ID "2" of Fig. 4 (step B3). Since the chain depth corresponding to this virtual MB chain definition is four, the instance candidate generation unit 121 generates four kinds of virtual MB chain instance candidates by repeating the above processing (step B4).

[Selecting a virtual MB chain instance]

The instance selection unit 123 reads a virtual MB chain instance candidate, as illustrated in Fig. 4, from the instance candidate storage apparatus 122. Further, the instance selection unit 123 reads a virtual MB model, as illustrated in Fig. 3, from the virtual MB model storage apparatus 113. Further, the instance selection unit 123 reads performance requirements and an upper limit value of the virtual CPU cores of virtual machines as a constraint content, as illustrated in Fig. 8, from the requirement/constraint storage apparatus 202 (step C1).

Here, the instance selection unit 123 substitutes an input frequency of a virtual MB model of a virtual MB included in a virtual MB chain from the performance requirement. If the chain has a branch, the change in the input frequency caused by the branch is described in advance in a functional rule. In the specific example, the flow rate of an input frequency is equally divided by the branch.

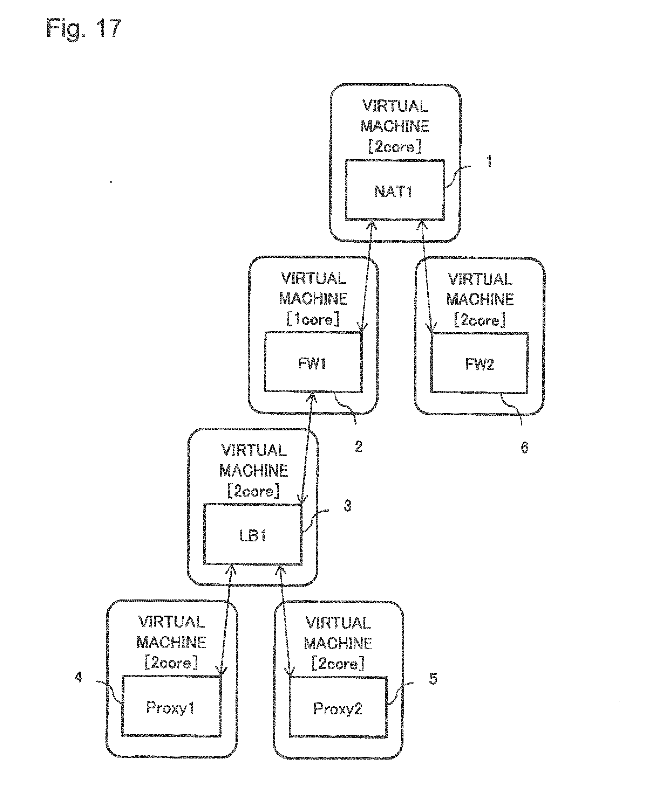

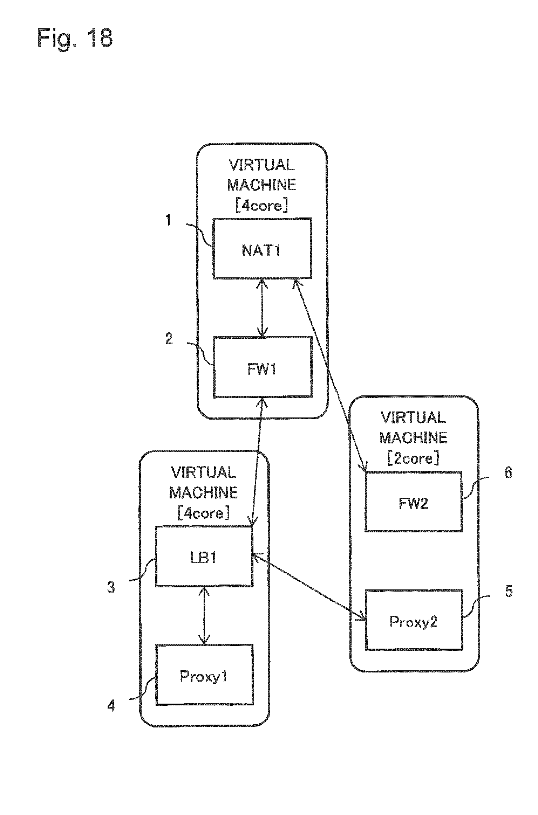

The instance selection unit 123 can estimate the minimum number of virtual CPU cores that satisfies the performance requirements as illustrated in Figs. 17 and 18 by specifying 50 milliseconds as the maximum value of processing time Y of the virtual MB chain, eight as the upper limit value of virtual CPU cores, as illustrated in Fig. 8, and applying PSO algorithm by setting the minimum value of virtual CPU cores as an estimation subject (step C2). Figs. 17 and 18 are explanatory diagrams illustrating an example of a virtual MB chain instance.

The instance selection unit 123 stores the estimated virtual MB chain instances in the virtual MB chain instance storage apparatus 101 as illustrated in Fig. 5. Then, by comparing the sums of virtual CPU cores among the respective estimated instances, the instance selection unit 123 can select the best virtual MB chain instance. As the result of the instance selection unit 123 comparing the sums of virtual CPU cores among the instances, if the minimum value of the sum of virtual CPU cores is "10," the virtual MB chain instance of instance ID "2" is selected as an optimal plan (step C3).

The operation administrator of the virtual system refers to information of virtual MB chain instances as illustrated in Fig. 5 stored in the virtual MB chain instance storage apparatus 101. Then, the operation administrator confirms that the virtual CPU resource consumption "10" of instance ID "2" is the least value.

The operation administrator of the virtual system retrieves the virtual MB chain instance configuration information of instance ID "2" from the virtual MB chain instance storage apparatus 101 and inputs the virtual MB chain instance configuration information to the virtual MB control means 303 and changes the configuration of the virtual MB chain instance within the virtual system.

As shown in Fig. 1, the virtual MB management system of the present invention includes virtual MB model generation means 110 for generating a virtual MB model that reproduces the performance of a virtual MB and virtual MB chain deriving means 120 that derives a virtual MB chain instance that is obtained by adding optimized virtual machine allocation and CPU resource amount specification to a virtual MB chain definition.

By employing such a configuration, the virtual MB management system can solve the first problem, as the virtual MB model generation means 110 generates a virtual MB model that estimates the performance in consideration of a correlation among the number of functional rules, CPU resource amount, and performance of the virtual MBs.

Further, the virtual MB management system can solve the second problem as the virtual MB chain deriving means 120 generates a virtual MB chain instance with a minimized sum of CPU resources in consideration of the influence of allocation of virtual MBs to virtual machines and allocation of CPU resources to virtual machines based on virtual MB chain definition information.

Using the virtual MB management system of the exemplary embodiment, a user can generate a configuration of a virtual MB chain instance with minimized total resource allocation only by specifying desired NW requirements (functional rules) and desired specifications (performance). as the virtual MB model generation means 110 generates a virtual MB performance model by taking into account a correlation among the number of functional rules, virtual CPU resource amount, processing time, and input frequency, as well as, the virtual MB chain deriving means 120 derives a virtual MB chain instance by taking into account the influence of allocation of virtual MBs to virtual machines and allocation of virtual CPU resources to virtual machines.

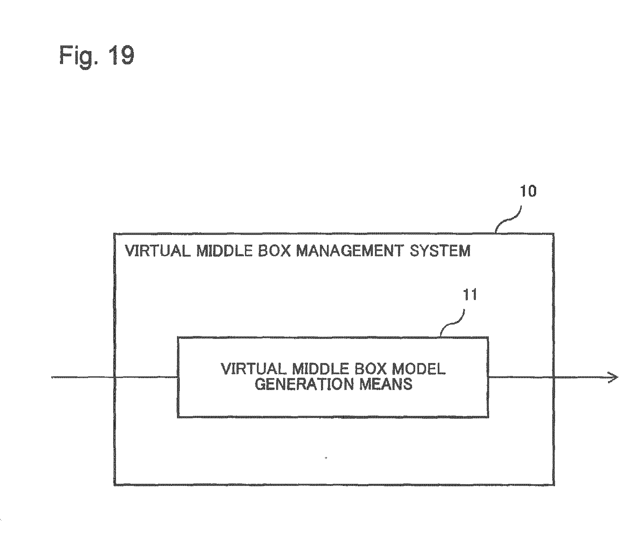

The following describes the outline of the present invention. Fig. 19 is a block diagram illustrating an overview of the virtual middlebox management system of the present invention. The virtual middlebox management system 10 includes virtual middlebox model generation means 11 (for example, virtual MB model generation means 110) that generates a performance model of a virtual middlebox by abstracting a correlation among the number of functional rules, virtual resource amount, input condition, and performance of the virtual middlebox.

Having such a configuration, the virtual middlebox management system can generate performance models of virtual middleboxes in consideration of a correlation among the number of functional rules, CPU resource amounts, and performance of the virtual middleboxes.

Further, the virtual middlebox management system 10 may include virtual middlebox chain deriving means (such as virtual MB chain deriving means 120) that generates a virtual machine allocation plan of virtual middleboxes in accordance with the characteristics of the virtual middleboxes.

Having such a configuration, the virtual middlebox management system can optimally allocate virtual middleboxes to virtual machines by taking into account the number of functional rules of the virtual middleboxes.

Further, the virtual middlebox chain deriving means may generate a virtual middlebox chain instance in which a total resource allocation is minimized using communication network functional requirements and performance requirements as inputs.

Having such a configuration, the virtual middlebox management system can generate a virtual middlebox chain instance total allocation of CPU resources by taking into account the influence of allocation of virtual middleboxes to virtual machines and allocation of CPU resources to the virtual machines.

Further, the virtual middlebox model generation means 11 may generate a performance model of a virtual middlebox by formulating a correlation among the number of functional rules, amount of virtual resources, input condition, and performance of the virtual middlebox by multi-variable analysis, then, the virtual middlebox chain deriving means may optimize allocation of the amount of virtual resources within the virtual middlebox chain instance using the generated performance models.

Having such a configuration, the virtual middlebox management system can optimally allocate the amount of virtual resources using virtual middlebox performance models that are formulated by multi-variable analysis.

Further, the virtual middlebox chain deriving means may include instance selection means (such as instance selection unit 123) that selects a virtual middlebox chain instance with minimized total resource allocation among the generated virtual middlebox chain instances.

Having such a configuration, the virtual middlebox management system can select the best virtual middlebox chain instance by comparing the sums of the virtual CPU cores among the instances.

The claimed invention has been described so far with reference to the above-described exemplary embodiment and examples, without limitation thereto. A variety of modifications that will be understood by those skilled in the art can be made to the configuration and details of the claimed invention within the scope thereof.

This application claims priority based on Japanese Patent Application No. 2013-243470 filed on November 26, 2013, which application is incorporated herein in its entirety by disclosure.

Industrial Applicability

The present invention is suitably applied to, for example, simultaneous optimization of allocation of nodes configuring a service system to virtual machines and the resource amounts of the virtual machines.

Reference Signs List

1-6        virtual MB
10         virtual middlebox (MB) management system
11, 110    virtual middlebox (MB) model generation means
100        virtual MB chain management system
101        virtual MB chain instance storage apparatus
111        virtual MB model generation unit
112        storage apparatus for model generation
113        virtual MB model storage apparatus
120        virtual MB chain deriving means
121        instance candidate generation unit
122        instance candidate storage apparatus
123        instance selection unit
201        MB functional rule storage apparatus
202        requirement/constraint storage apparatus
203        virtual MB chain definition storage apparatus
300        virtual system management apparatus
301        virtual system monitoring means
302        monitoring information storage apparatus
303        virtual MB control means
400-40n    virtual system

**Claims**

1.  A virtual middlebox management system comprising: virtual middlebox model generation means that generates a performance model of a virtual middlebox by abstracting a correlation among number of functional rules, an amount of virtual resources, an input condition and a performance of the virtual middlebox.

2.  The virtual middlebox management system according to claim 1 further comprising:

    virtual middlebox chain deriving means that generates a virtual machine allocation plan for the virtual middlebox in accordance with characteristics of the virtual middlebox.

3.  The virtual middlebox management system according to claim 2, wherein the virtual middlebox chain deriving means generates a virtual middlebox chain instance in which a total resource allocation is minimized using a communication network functional requirement and a performance requirement as inputs.

4.  The virtual middlebox management system according to claim 2 or 3, wherein
    the virtual middlebox model generation means generates the performance model of the virtual middlebox by formulating the correlation among the number of functional rules, the amount of virtual resources, the input condition and the performance of the virtual middlebox by multi-variable analysis, and
    the virtual middlebox chain deriving means optimizes allocation of the amount of virtual resources within the virtual middlebox chain instance using the generated performance model.

**5.** A virtual middlebox management method comprising:

generating a performance model of a virtual middlebox by abstracting a correlation among number of functional rules, an amount of virtual resources, an input condition and a performance of the virtual middlebox.

**6.** The virtual middlebox management method according to claim 5 further comprising:

generating a virtual machine allocation plan for the virtual middlebox in accordance with characteristics of the virtual middlebox.

**7.** The virtual middlebox management method according to claim 6, further comprising:

generating a virtual middlebox chain instance in which a total resource allocation is minimized using a communication network functional requirement and a performance requirement as inputs.

**8.** A virtual middlebox management program, which causes a computer to execute
virtual middlebox model generation processing that generates a performance model of a virtual middlebox by abstracting a correlation among number of functional rules, an amount of virtual resources, an input condition and a performance of the virtual middlebox.

**9.** The virtual middlebox management program according to claim 8, which further causes the computer to execute
virtual middlebox chain deriving processing that generates a virtual machine allocation plan for the virtual middlebox in accordance with characteristics of the virtual middlebox.

**10.** The virtual middlebox management program according to claim 9, which further causes the computer to execute
virtual middlebox chain deriving processing that generates a virtual middlebox chain instance in which total resource allocation is minimized using a communication network functional requirement and a performance requirement as inputs.

# Fig. 1

LEGEND

DATA FLOW: ⟶

**400** VIRTUAL SYSTEM
- VIRTUAL MB
- ⋮
- VIRTUAL MB
- VIRTUAL SERVER
- ⋮
- VIRTUAL SERVER

**40n** VIRTUAL SYSTEM
- VIRTUAL MB
- ⋮
- VIRTUAL MB
- VIRTUAL SERVER
- ⋮
- VIRTUAL SERVER

**10** VIRTUAL MB MANAGEMENT SYSTEM

**300** VIRTUAL SYSTEM MANAGEMENT APPARATUS

**302** MONITORING INFORMATION STORAGE APPARATUS

**301** VIRTUAL SYSTEM MONITORING MEANS

**303** VIRTUAL MB CONTROL MEANS

**100** VIRTUAL MB CHAIN MANAGEMENT SYSTEM

**201** MB FUNCTIONAL RULE STORAGE APPARATUS

**101** VIRTUAL MB CHAIN INSTANCE STORAGE APPARATUSS

**202** REQUIREMENT/ CONSTRAINT STORAGE APPARATUS

**111** VIRTUAL MB MODEL GENERATION UNIT

**123** INSTANCE SELECTION UNIT

**112** STORAGE APPARATUS FOR MODEL GENERATION

**122** INSTANCE CANDIDATE STORAGE APPARATUS

**203** VIRTUAL MB CHAIN DEFINITION STORAGE APPARATUS

**113** VIRTUAL MB MODEL STORAGE APPARATUS

**121** INSTANCE CANDIDATE GENERATION UNIT

VIRTUAL MB MODEL GENERATION MEANS

**110**

VIRTUAL MB CHAIN DERIVING MEANS

**120**

Fig. 2

| ID | MBID | PROCESSING TIME (msec.) | INPUT FREQUENCY (accesses/sec.) | NUMBER OF VIRTUAL CPU CORES | NUMBER OF FUNCTIONAL RULES IN VIRTUAL MACHINE |
|---|---|---|---|---|---|
| 1 | 1 | 23 | 10 | 2 | 9 |
| 2 | 2 | 30 | 18 | 2 | 9 |
| ... | ... | ... | ... | ... | ... |

EP 3 076 303 A1

Fig. 3

| MBID | PREDICTION EQUATION MODEL |
|------|---------------------------|
| 1 | $y_{LB} = \dfrac{2.4\,\lambda_{LB} \times rule\_{VM}}{1.5\,cpu\_{VM}} + 1.3$ |
| 2 | $y_{FW} = \dfrac{1.1\,\lambda_{FW} \times rule\_{VM}}{0.6\,cpu\_{VM}} + 0.4$ |
| ... | ... |

## Fig. 4

| CANDIDATE ID | INSTANCE CANDIDATE |
|---|---|
| 1 | |
| 2 | |
| . . . | . . . |

## Fig. 5

| INSTANCE ID | CANDIDATE ID | TOTAL RESOURCE AMOUNT | VIRTUAL MB CHAIN INSTANCE |
|---|---|---|---|
| 1 | 1 | 11 | |
| 2 | 2 | 10 | |
| ... | ... | ... | ... |

Fig. 6

| MBID | MB NAME | FUNCTIONAL OVERVIEW |
|---|---|---|
| 1 | LB | LOAD BALANCER |
| 2 | FW | FIREWALL |
| 3 | . . . | . . . |

**Fig. 7**

| FUNCTIONAL RULE ID | MBID | NAME | NUMBER OF FUNCTION AL RULES | FUNCTIONAL RULE DEFINITION |
|---|---|---|---|---|
| LB1 | 1 | number of active connections | 4 | i)Zone[internet(INPUT SOURCE)]^Input[http(INPUT TYPE)]^Condition[any(CONDITION 1)] => Zone[DMZ(OUTPUT DESTINATION)]^State Option[the lowest connection server]<br>ii) ···<br>iii) ···<br>iv) Zone[intranet](INPUT SOURCE)^Input[http(INPUT TYPE)]^Condition[any(CONDITION 1)] => Zone[internal network(OUTPUT DESTINATION)]^State Option[the lowest connection server] |
| LB2 | 1 | round robin | 3 | ··· |
| ··· | ··· | ··· | ··· | ··· |
| FW1 | 2 | dynamic packet filter | 5 | ··· |
| ··· | ··· | ··· | ··· | ··· |

Fig. 8

| REQUIREMENT ID | PERFORMANCE UPPER LIMIT VALUE (msec.) | INPUT FREQUENCY (accesses/sec.) | UPPER LIMIT OF NUMBER OF VIRTUAL CPU CORES | CHAIN DEFINITION ID |
|---|---|---|---|---|
| 1 | 50 | 100 | 8 | 1 |
| 2 | 10 | 50 | 12 | 2 |
| ... | ... | ... | ... | ... |

EP 3 076 303 A1

Fig. 9

| CHAIN DEFINITION ID | CHAIN DEFINITION (GRAPH STRUCTURE) |
|---|---|
| 1 | |
| 2 | |
| . . . | . . . |

Fig. 10

| LOGID | VIRTUAL MACHINE ID | PROCESSING START TIME | PROCESSING TIME (msec.) | INPUT FREQUENCY (accesses/sec.) | MBID | FUNCTIONAL RULE ID | NUMBER OF VIRTUAL CPU CORES |
|---|---|---|---|---|---|---|---|
| 1 | VM1 | 2012/09/10 10:19.31.324 | 23 | 10 | 1 | LB1 | 2 |
| 2 | VM1 | 2012/09/10 10:20.54.938 | 30 | 18 | 2 | FW1 | 2 |
| ... | ... | ... | ... | ... | ... | ... | ... |

EP 3 076 303 A1

Fig. 11

Fig. 12

START

LOOP TO COUNT NUMBER
OF FUNCTIONAL RULES — A1

ACQUIRE COLLECTION OF VIRTUAL MBS COEXISTING
IN VIRTUAL MACHINE FROM MONITORING
INFORMATION AND MB FUNCTIONAL RULE
INFORMATION — A2

CALCULATE SUM OF FUNCTIONAL RULES OF COEXISTING
VIRTUAL MBS, STORE SUM, WITH PROCESSING TIME, ACCESS
ARRIVAL FREQUENCY, AND CPU RESOURCE AMOUNT OF MB, IN
STORAGE APPARATUS FOR MODEL GENERATION — A3

REPEAT LOOP FOR EACH
VIRTUAL MACHINE — A4

MB MODEL GENERATION
LOOP — A5

ACQUIRE PROCESSING TIME, ACCESS ARRIVAL FREQUENCY,
AND CPU RESOURCE AMOUNT OF MB, AND COLLECTION OF
SUMS OF FUNCTIONAL RULES OF MBS, FROM MODEL
GENERATION INFORMATION — A6

FORMULATE PROCESSING TIME AS OBJECTIVE
VARIABLE AND OTHER ELEMENTS AS EXPLANATORY
VARIABLE BY MULTI VARIABLE ANALYSIS AND STORE
THE RESULT — A7

REPEAT LOOP FOR EACH
VIRTUAL MB — A8

END

Fig. 13

```
                    ┌─────────────┐
                    │    START    │
                    └──────┬──────┘
                           │
                           ▼
    ┌──────────────────────────────────────────────┐  ╮ B1
    │  READ VIRTUAL MB CHAIN DEFINITION AND SERIALIZE│
    │         WITH DEPTH FIRST ALGORITHM             │
    └───────────────────────┬────────────────────────┘
                            │
                            ▼
    ╱──────────────────────────────────────────────╲  ╮ B2
    │         CANDIDATE GENERATION LOOP              │
    │       WHEN DEEPEST IS n, m = 1; m · n          │
    ╲──────────────────────────────────────────────╱
                            │
                            ▼
    ┌──────────────────────────────────────────────┐  ╮ B3
    │  ALLOCATE m NUMBER OF VIRTUAL MBS TO A VIRTUAL │
    │   MACHINE AND STORE AS INSTANCE CANDIDATE      │
    └───────────────────────┬────────────────────────┘
                            │
                            ▼
         ╲──────────────────────────────╱  ╮ B4
          │           m++                │
          ╱──────────────────────────────╲
                        │
                        ▼
                 ┌─────────────┐
                 │     END     │
                 └─────────────┘
```

Fig. 14

```
                    ┌─────────────┐
                    │    START    │
                    └──────┬──────┘
                           │
                           ▼
   ┌───────────────────────────────────────────────┐   C1
   │   READ PERFORMANCE CONDITION, UPPER LIMIT OF   │
   │   VIRTUAL CPU CORES, COLLECTION OF INSTANCE    │
   │                  CANDIDATES                    │
   └───────────────────────┬───────────────────────┘
                           │
                  ═════════════════════
                  ═════════════════════
                           │
                           ▼
   ┌───────────────────────────────────────────────┐   C2
   │   DERIVE VIRTUAL CPU CORE ALLOCATION SATISFYING │
   │   PERFORMANCE CONDITION USING PSO ALGORITHM    │
   │                FOR EACH CANDIDATE              │
   └───────────────────────┬───────────────────────┘
                           │
                  ═════════════════════
                  ═════════════════════
                           │
                           ▼
   ┌───────────────────────────────────────────────┐   C3
   │   COMPARE SUMS OF VIRTUAL CPU CORE ALLOCATION  │
   │   AMONG CANDIDATES AND SELECT CANDIDATE WITH   │
   │   THE LEAST SUM AS VIRTUAL MB CHAIN INSTANCE   │
   └───────────────────────┬───────────────────────┘
                           │
                           ▼
                    ┌─────────────┐
                    │     END     │
                    └─────────────┘
```

Fig. 15

Fig. 16

Fig. 17

Fig. 18

Fig. 19

```
                                                              10

  ┌─────────────────────────────────────────────────────────┐
  │ VIRTUAL MIDDLE BOX MANAGEMENT SYSTEM                     │
  │                                                          │
  │                                             11           │
  │                                                          │
  │         ┌──────────────────────────────────┐            │
──┼─────────┤     VIRTUAL MIDDLE BOX MODEL      ├────────────┼──────▶
  │         │       GENERATION MEANS           │            │
  │         └──────────────────────────────────┘            │
  │                                                          │
  │                                                          │
  └─────────────────────────────────────────────────────────┘
```

Fig. 20

VIRTUAL MACHINE (1core)

NAT
(Symmetric NAT)

FW
(Dynamic Filter)

FW
(WAF)

VIRTUAL MACHINE (2core)

LB
(Number of conn.)

VIRTUAL MACHINE (1core)

Fig. 21

AGGREGATION VIRTUAL ROUTER

VRF1(Priority Class)

VRF2(Best Effort Class)

VPN1  VPN2  VPN1  VPN2

ADDRESS TRANSLATION APPARATUS

ADDRESS TRANSLATION APPARATUS

ADDRESS TRANSLATION APPARATUS

ADDRESS TRANSLATION APPARATUS

INTEGRATION AAA APPARATUS

TRAFFIC SEPARATION/INTEGRATION APPARATUS

TRAFFIC SEPARATION/INTEGRATION APPARATUS

VPN TERMINAL APPARATUS

VPN TERMINAL APPARATUS

VPN1

VPN2

USER SIDE VPN TERMINAL APPARATUS

USER SIDE VPN TERMINAL APPARATUS

## INTERNATIONAL SEARCH REPORT

| International application No. |
| --- |
| PCT/JP2014/005142 |

| A. CLASSIFICATION OF SUBJECT MATTER |
| --- |
| *G06F13/00*(2006.01)i, *G06F9/46*(2006.01)i, *G06F9/50*(2006.01)i |

According to International Patent Classification (IPC) or to both national classification and IPC

| B. FIELDS SEARCHED |
| --- |
| Minimum documentation searched (classification system followed by classification symbols) <br> G06F13/00, G06F9/46, G06F9/50 |

| Documentation searched other than minimum documentation to the extent that such documents are included in the fields searched |
| --- |
| Jitsuyo Shinan Koho    1922–1996    Jitsuyo Shinan Toroku Koho   1996–2014 <br> Kokai Jitsuyo Shinan Koho   1971–2014    Toroku Jitsuyo Shinan Koho    1994–2014 |

| Electronic data base consulted during the international search (name of data base and, where practicable, search terms used) |
| --- |

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | Kento SATO et al., "Kaso Machine Doteki Saihaichi ni yoru Daikibo Data Access no Kosokuka", Symposium on Advanced Computing Systems and Infrastructures, 20 May 2010 (20.05.2010), vol.2010, no.5, pages 79 to 86 | 1–10 |
| A | Mitsuru YANAGISAWA, Toshinori TAKEMURA, "A method for estimated performance of virtual machines by common index and its evaluation", IPSJ SIG Notes, 21 January 2009 (21.01.2009), vol.2009, no.6, pages 27 to 33 | 1–10 |

| ☒ Further documents are listed in the continuation of Box C. | ☐ See patent family annex. |
| --- | --- |

| \*   Special categories of cited documents: <br> "A"   document defining the general state of the art which is not considered    to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |
| --- | --- |

| Date of the actual completion of the international search <br>    26 December 2014 (26.12.14) | Date of mailing of the international search report <br>    13 January 2015 (13.01.15) |
| --- | --- |
| Name and mailing address of the ISA/ <br>    Japan Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/005142

C (Continuation). DOCUMENTS CONSIDERED TO BE RELEVANT

| Category* | Citation of document, with indication, where appropriate, of the relevant passages | Relevant to claim No. |
|---|---|---|
| A | ALESSIO BOTTA,ANTONIO PESCAPE, 'Monitoring and measuring wireless network performance in the presence of middleboxes', [online], IEEE, 2011.01.26, [retrieval date 2014.12.26], <URL: http://ieeexplore.ieee.org/stamp/stamp.jsp?tp=& arnumber=5720184> | 1-10 |
| A | DILIP JOSEPH,ION STOICA, 'Modeling Middleboxes', [online], IEEE, 2008.09.19, [retrieval date 2014.12.26], <URL:http://ieeexplore.ieee.org/ stamp/stamp.jsp?tp=&arnumber=4626228> | 1-10 |
| A | US 2013/0132536 A1 (NICIRA, INC.), 23 May 2013 (23.05.2013), paragraphs [0035] to [0084] & WO 2013/074827 A1 | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011228864 A

- JP 2013243470 A

**Non-patent literature cited in the description**

- **D. JOSEPH.** Modeling middleboxes. *IEEE NETWORK,* 2008, vol. 22 (5), 20-25